Europäisches Patentamt

European Patent Office

Office européen des brevets

(19)

(11) **EP 1 703 685 A2**

(12) **EUROPEAN PATENT APPLICATION**

(43) Date of publication:
**20.09.2006 Bulletin 2006/38**

(51) Int Cl.:
*H04L 25/02* (2006.01)    *H04L 27/26* (2006.01)

(21) Application number: **05254191.9**

(22) Date of filing: **04.07.2005**

(84) Designated Contracting States:
**AT BE BG CH CY CZ DE DK EE ES FI FR GB GR
HU IE IS IT LI LT LU LV MC NL PL PT RO SE SI
SK TR**
Designated Extension States:
**AL BA HR MK YU**

(30) Priority: **17.03.2005 JP 2005076318**

(71) Applicant: **FUJITSU LIMITED
Kawasaki-shi,
Kanagawa 211-8588 (JP)**

(72) Inventor: **Yoshida, Makoto,
c/o Fujitsu Limited
Kawasaki-shi
Kanagawa 211-8588 (JP)**

(74) Representative: **Gibbs, Christopher Stephen et al
HASELTINE LAKE
Imperial House,
15-19 Kingsway
London WC2B 6UD (GB)**

(54) **Propagation path estimating method and apparatus**

(57) A propagation path estimation method for a receiver of a radio communication system in which band limiting of a signal is performed in signal transmission and reception. The method comprises: estimating an impulse response group of a propagation path of the signal; having the impulse response group pass through a filter (53) with a filter characteristic inverse of a band limiting filter characteristic for the band limiting; removing impulse responses corresponding to noise components from an output of the filter (53) by threshold judgement; and estimating the propagation path using impulse responses which are not removed. The method is capable of suppressing background noises regardless of propagation environments such as a delay spread or path intervals, so that the accuracy of propagation path estimation is significantly improved.

FIG. 4

35:PROPAGATION PATH
ESTIMATING UNIT

**Description**

CROSS REFERENCE TO RELATED APPLICATIONS

This application is based on and hereby claims priority to Japanese  Application  No.  2005-76318  filed  on March 17, 2005 in Japan, the contents of which are hereby incorporated by reference.

BACKGROUND OF THE INVENTION

(1) Field of the Invention:

The present invention relates to a propagation path estimating method and apparatus , and the invention relates particularly to a propagation path estimating method and apparatus in which a receiver estimates a propagation path which a transmission signal passes through when communications using a specific radio communication transmission method is performed.

(2) Description of the Related Art:

In radio communications systems in which predetermined bands are used for communications, band limitation is performed for the purpose of reducing influence to other frequency bands and in light of the characteristic of analogue components of a transmitter/receiver. On the other hand, in radio communications systems using coherent detection, it is necessary to estimate propagation path characteristics (propagation path information), and the estimation accuracy will significantly influence the transmission error rate.

For example, in radio communications systems using an Orthogonal Frequency Division Multiplexing (OFDM) base modulation method, propagation path information of all of the subcarriers used in transmission needs to be estimated, and the estimation accuracy will significantly influence the transmission error rate as in the case of other radio communication systems using coherent detection. From this reason, in radio communication systems using an OFDM base modulation method, known symbols are transmitted in subcarriers used in transmission, and propagation path information for each subcarrier is estimated.

As described above, since the propagation path estimation accuracy has a significant influence on the transmission error rate, technology for suppressing background noise contained in the propagation path estimation value, which is estimated using known symbols, is often applied. For example, as a first conventional art, there is a technique of frequency averaging processing between adj acent subcarriers (see the following non-patent document 1); as a second conventional art, there is a technique of forcible "0" replacement of an impulse response group of an estimated propagation path.

[Non-patent Document 1] Atarashi, Abeta, and Sawahashi, "Performance of Forward Link Broadband Packet TD-OFCDM with Iterative Channel Estimation", Technical Report of IEICE. RCS2000-186, pp.85-91, January 2001
[Patent Document 1] Japanese Patent Application Laid-Open No. 2000-341242

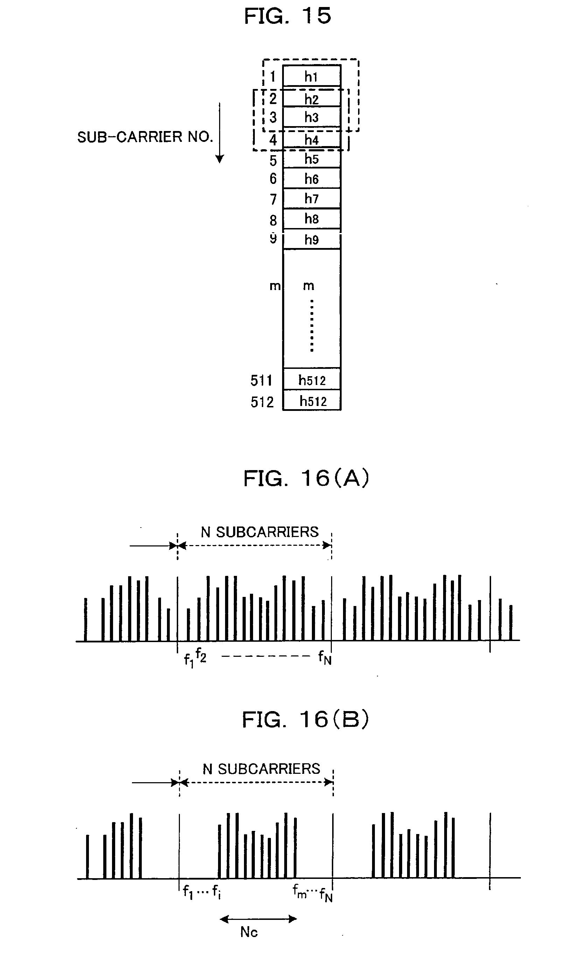

The first conventional art suppresses background noise by averaging between adj acent subcarriers utilizing coherence (uniformity) in the frequency direction. For example, as shown in FIG. 15, if properties of 512 propagation paths are given as h1 through h512, the propagation path properties of three adjacent subcarriers are averaged to obtain the propagation path property of the middle subcarrier.

In the first conventional art, the propagation path property is coherent in a coherent bandwidth which is in proportion to the reciprocal of a delay spread. If M-number of subcarriers are present in this coherent bandwidth, propagation path properties of these M-number of subcarriers are the same. If the delay spread is small, the amount of fluctuation in the propagation path property in the frequency direction is slight (correlation is large), and thus, back ground noise is efficiently suppressed by increasing the number of averaging operations in the frequency direction. A difference occurs in receiving wave arrival times in a multipath environment, and the spread of this delay time is called "delay spread".

However, in the first conventional art, the greater the delay spread, the smaller the correlation of channel fluctuation amount of adjacent subcarriers. Hence, an unnecessarily great number of averaging operations in the frequency direction will bring about a problem of deteriorated estimation accuracy. An actual delay spread greatly varies: 0.2 to 2.0 "s outdoors in urban areas; 10 to 20 "s outdoors in mountainous regions. Therefore, in the first conventional art, it is necessary to select the optimal number of averaging operations while measuring delay spread. In addition, even if the optimal number of averaging operations can be selected, it is still impossible to perform averaging operations in mountainous regions where the delay spread is large, so that background noise cannot be suppressed.

On the other hand, in the second conventional art, the electric power of an impulse response group on an estimated propagation path is compared with a predetermined threshold, and impulses equal to or smaller than the threshold are forcibly replaced by "0", so that background noise is suppressed. In an OFDM signal, a signal mapped into a subcarrier is subjected to IFFT processing to be converted into a time domain for transmission. If the IFFT size (N-point IFFT) differs from the number of subcarriers (Nc) used in signal transmission, this is equivalent to performing multiplication by a rectangular window on the frequency axis. Thus, an OFDM time signal is a signal in which a sinc function, which is specified based on the IFFT size (N) and the number of subcarriers ($Nc$), is convoluted.

Utilizing this characteristic feature, the second conventional art sets the threshold to a value that is approximately 13 dB below the main lobe, whereby a side lobe of the sinc function are not regarded as a valid path (impulse). When N-point IFFT processing is performed with N pieces of data serving as the components of N-number of subcarrier components $f_1$ through $f_N$, the frequency spectrum is such that, as shown in FIG. 16 (A). In OFDM, a signal after IFFT processing is converted into an analogue signal, and a lowpass filter extracts baseband signal components of $f_1$ through $f_N$ from the analogue signal, and the signal components are then upconverted into radio frequency and transmitted. In order to select the baseband signal components of $f_1$ through $f_N$, a lowpass filter with a steep cutoff property is necessary, but manufacturing of such a lowpass filter is difficult.

Therefore, as shown in FIG. 16 (B), carriers on both ends of N-number of subcarriers $f_1$ through $f_N$ are not used in data transmission, that is, *Nc*-number *(Nc<N)* of subcarriers are used in data transmission. In this manner, when the number Nc of subcarriers used in data transmission differs from the IFFT size (=N), the propagation path responses do not become an impulse as shown in FIG. 17, but becomes a sinc function, and the peak value of the main lobe dimishes to *Nc/N*. Hence, when *Nc=N,* the propagation path response becomes an impulse as shown in FIG. 18 (A), but when *Nc<N,* it becomes a waveform on which a sinc function is superimposed.

The conventional second art sets the threshold to a value that is approximately 13 dB below the main lobe, whereby a side lobe of the sinc function is not judged to be a valid impulse, and this suppresses background noises. In the second conventional art, the side lobes of the sinc function are removed, and only the main lobe is judged to be a valid path. However, since the amplitude of the main lobe diminishes to *Nc/N* owing to the nature of the sinc function, and thus, the second conventional art has a problem of containing a residual estimation error. In a propagation environment where path spacing is small, side lobes of the sinc function interfere with each other, and the combined value in the overlapped sample exceeds the threshold. Hence, a path is erroneously judged to be present where no path exists.

SUMMARY OF THE INVENTION

With the foregoing problems in view, it is an object of the present invention to provide a propagation path estimating method and apparatus in which background noise is suppressed regardless of propagation environments such as a delay spread and path spacing, to significantly improve the accuracy of propagation path estimation. Although the above conventional arts are limited to OFDM base radio transmission method, the present invention is not limited to it.

In order to accomplish the above object, according to the present invention, (1) there is provided a propagation path estimation method for a receiver of a radio communication system in which band limiting of a signal is performed in signal transmission and reception, the method comprising: estimating an impulse response group of a propagation path of the signal; having the impulse response group pass through a filter with a filter characteristic inverse of a band limiting filter characteristic for the band limiting; removing impulse responses corresponding to noise components from an output of the filter by threshold judgement; and estimating the propagation path using impulse responses which are not removed.

(2) As a preferred feature, impulse responses equal to or smaller than a first threshold, among the impulse response group, is replaced by a specific value before the impulse response group is made to pass through the filter.
(3) As another preferred feature, impulse responses equal to or smaller than a second threshold, among an output of the filter, is replaced by a specific value.
(4) As yet another preferred feature, the filter is a FIR-type filter whose filter coefficients are obtained by an inverse matrix operation which uses a part of time response of the band limiting filter characteristic.
(5) As a generic feature, there is provided a propagation path estimation apparatus for use in a receiver of a radio communication system in which band limiting of a signal is performed in signal transmission and reception, the apparatus comprising: an impulse response estimating unit which estimates an impulse response group of a propagation path of the signal, a filter with a filter characteristic inverse of a band limiting filter characteristic for the band limiting, into which filter the impulse response group estimated by the impulse response estimating unit is input, an estimating unit which estimates the propagation path by selecting, by means of threshold judgement, impulse responses from an output of the filter, the selected impulse responses not including impulse responses corresponding to noise components.

The present invention guarantees the following advantageous results:

(1) In OFDM transmission, even if a delay wave exceeding a GI (Guard Interval) occurs, it is possible to obtain a propagation path estimation value in which background noise is suppressed to a level equivalent to a case of a known propagation path.

(2) It is possible to suppress background noise regardless of propagation environments such as delay spread and path intervals.

(3) In particular, the propagation path responses are obtained by making the estimated impulse response group pass through a filter having a characteristic inverse of that of a band limiting filter, whereby the impulse response group is equalized. This arrangement eliminates the necessity of complicating matrix operations, and it can be realized by hardware, not by software, so that the circuit size is reduced and a high-speed processing is available.

(4) In addition, if impulse responses equal to or smaller than a first threshold, out of the impulse response group, are replaced by a specific value (for example, "0") before they are made to pass through the above filter, influence of noise can be removed.

(5) If filter coefficients of the above filter are obtained using a part of time response of a band limiting filter characteristic, it is possible to stably obtain the above filter coefficients without causing dispersion like in an ideal band limiting filter.

(6) Further, if impulse responses, out of outputs of the above filter, equal to or smaller than a second threshold is replaced by a specific value (for example, "0"), it is possible to regard elements after equalization which are equal to or smaller than the second threshold as equalization errors, and it is possible remove their influence.

Other objects and further features of the present invention will be apparent from the following detailed description when read in conj unction with the accompanying drawings.

BRIEF DESCRIPTION OF THE DRAWINGS

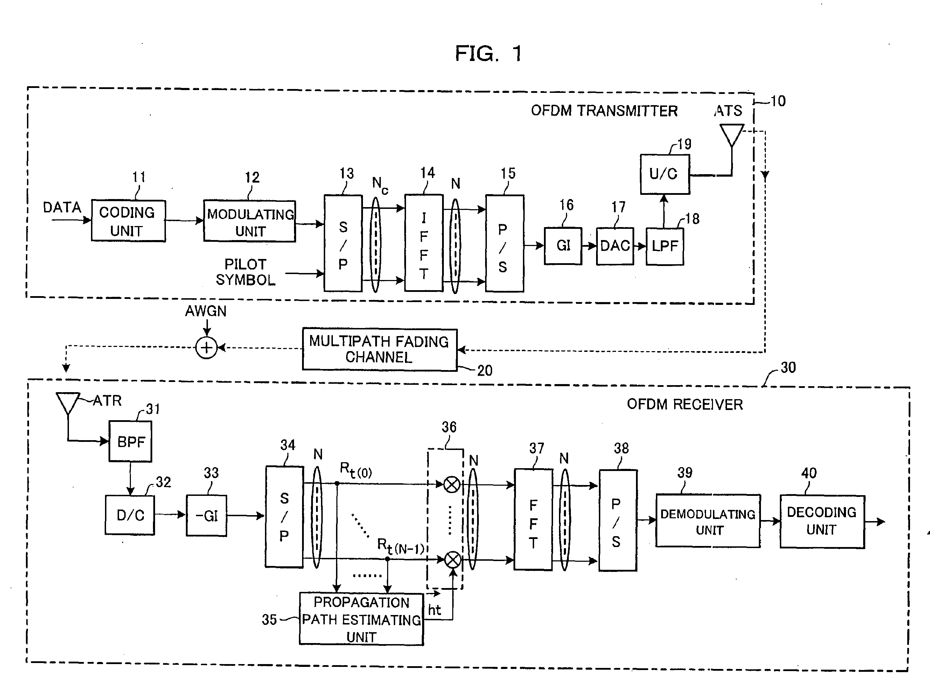

FIG. 1 is a block diagram showing a configuration of an OFDM system including a channel estimating apparatus according to one preferred embodiment of the present invention;

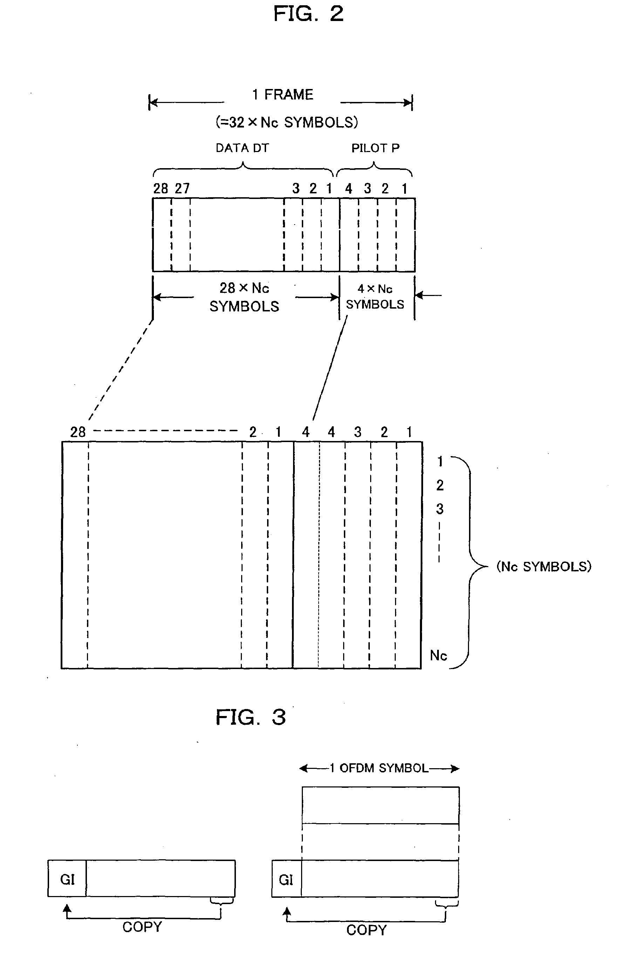

FIG. 2 is a view for describing data format and serial/parallel conversion performed by an S/P converter according to the present embodiment;
FIG. 3 is a view for describing insertion of a guard interval;

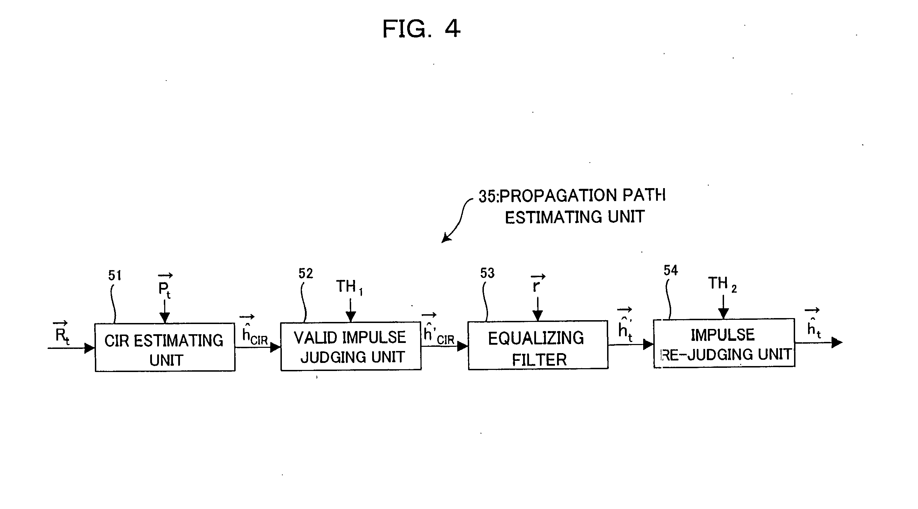

FIG. 4 is a block diagram showing a construction of the propagation path estimating unit of FIG. 1;

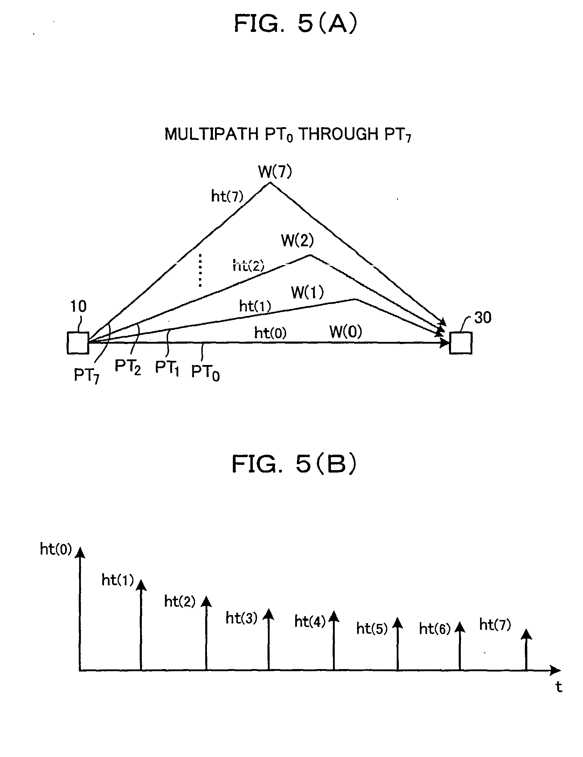

FIG. 5(A) and FIG. 5(B) are views for describing a propagation path response vector according the present invention;

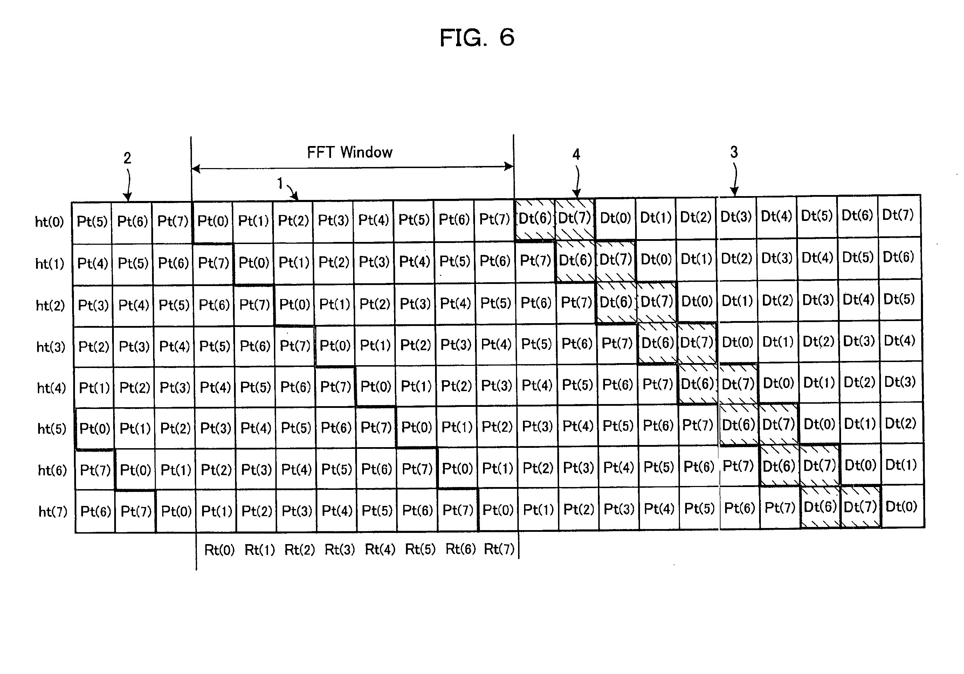

FIG. 6 is a view for describing a receive-signal vector when N=8 according to the present invention;

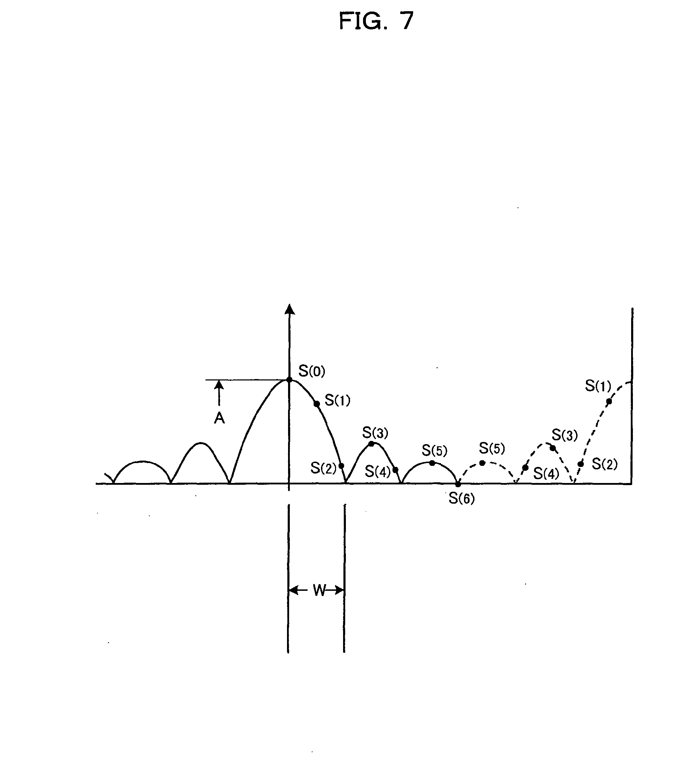

FIG. 7 is a view for describing a waveform of the sinc function according to the present embodiment;

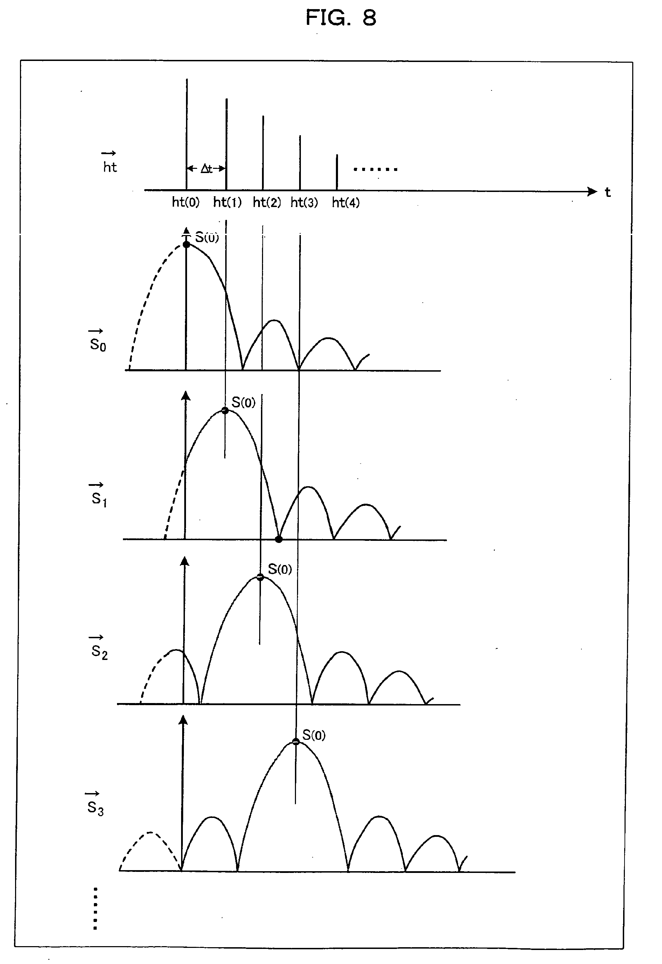

FIG. 8 is a view for describing column vectors of the S matrix according to the present embodiment;

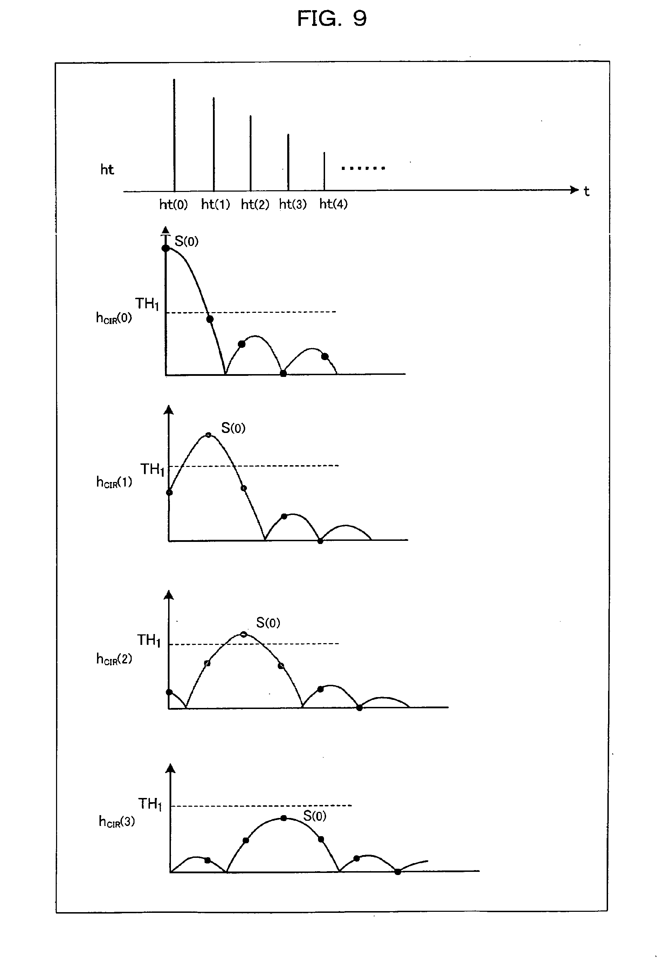

FIG. 9 is a view for describing CIR elements of the CIR estimation vectors according to the present embodiment;

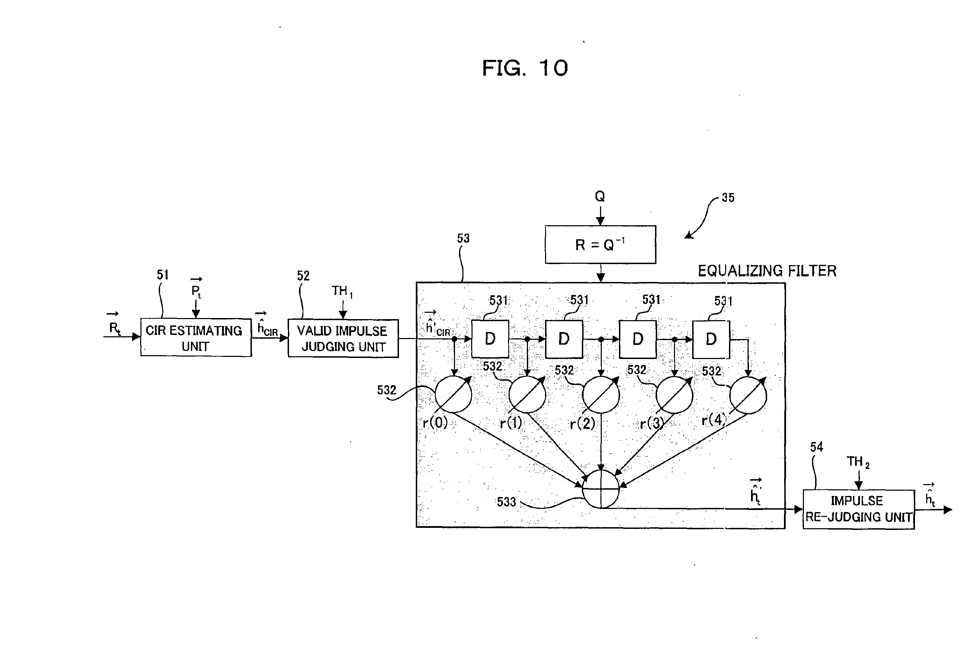

FIG. 10 is a block diagram showing a configuration of a propagation path estimation unit in which a construction of an equalizing filter of FIG. 4 is illustrated;

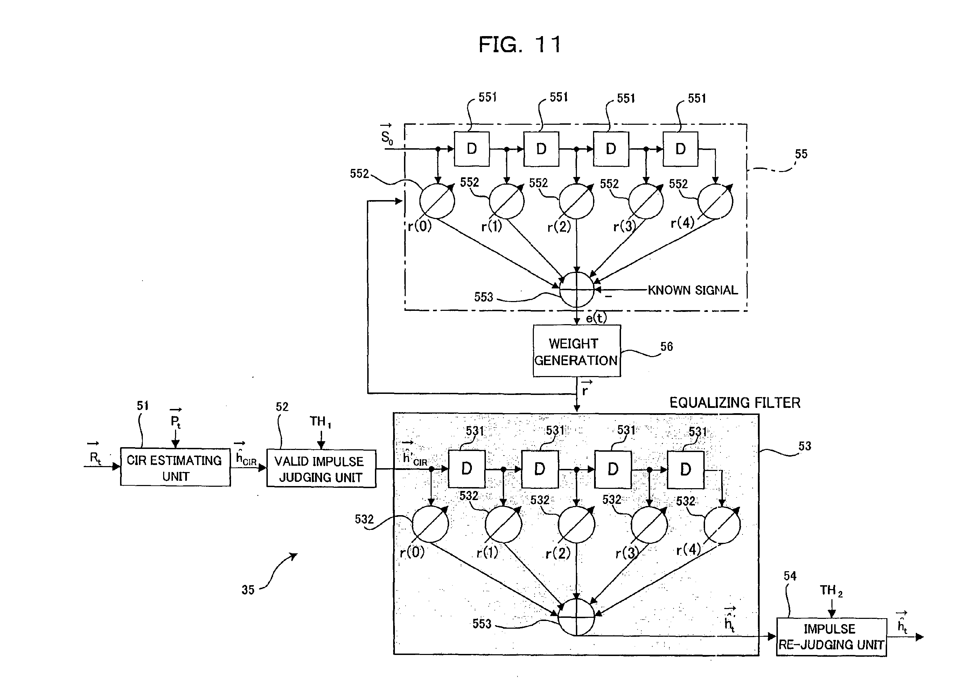

FIG. 11 is a block diagram showing a modified example of the propagation path estimating unit of FIG. 4 and FIG. 10;

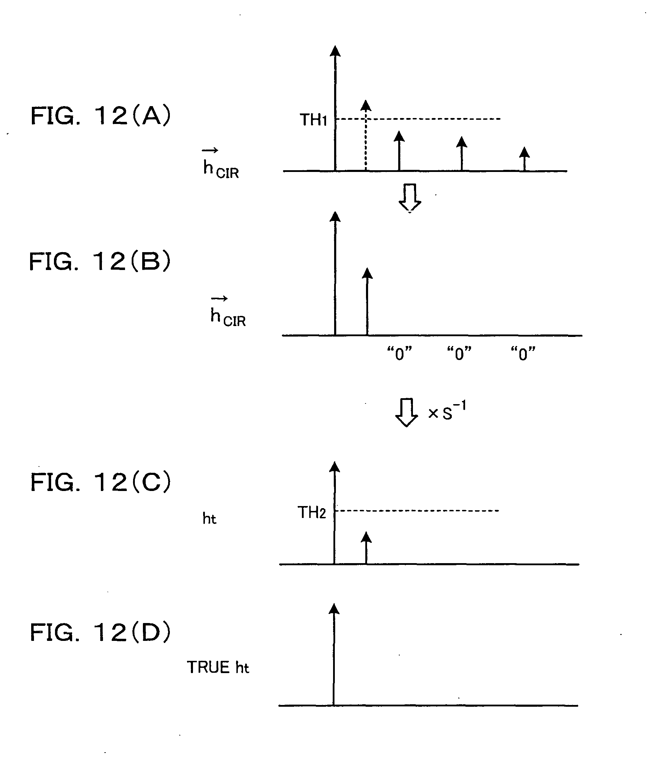

FIG. 12 (A) to FIG. 12 (D) is a view for describing an operation of an impulse re-judgement unit of FIG. 4 and FIG. 10;

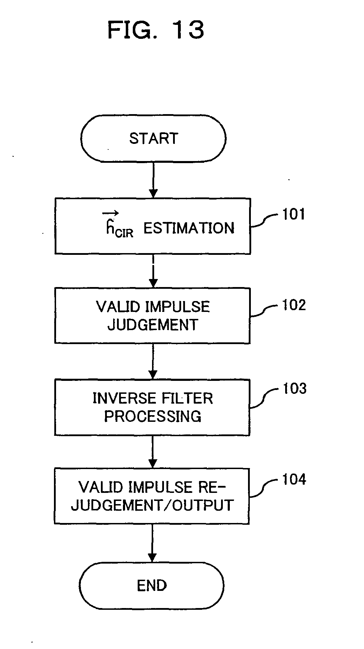

FIG. 13 is a flowchart for describing an operation (channel estimation processing) of the propagation path estimating unit of FIG. 4 and FIG. 10;

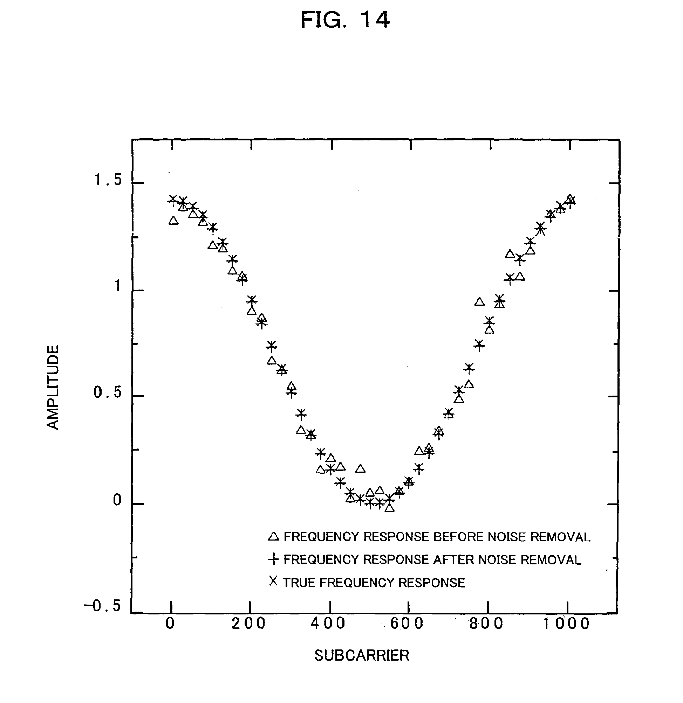

FIG. 14 is a view showing an example of a simulation result (real number components of frequency characteristics of propagation path estimation values) according to the present embodiment;
FIG. 15 is a view showing a first conventional art in which background noise is suppressed by averaging of adjacent subcarriers;
FIG. 16 (A) is a view showing an example of a frequency spectrum in which all the subcarriers are used in data transmission; FIG. 16 (B) is a view showing an example of a frequency spectrum in which data transmission is performed using subcarriers which do not include subcarriers of both ends;

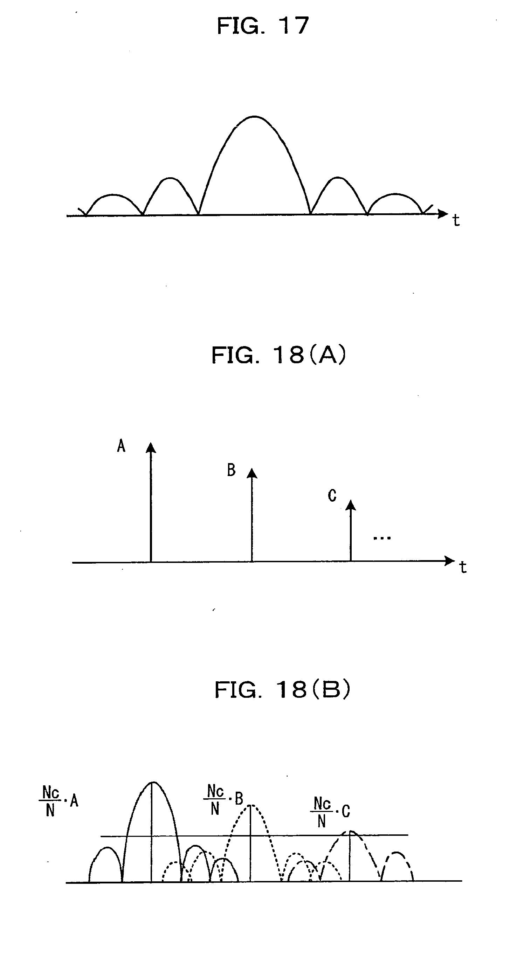

FIG. 17 is a view for describing a propagation path response (sinc function) when subcarriers at both ends, out of N-number of subcarriers, are not used for data transmission;
FIG. 18 (A) and FIG. 18 (B) are views for describing an issue to be solved in a second conventional art.

DESCRIPTION OF THE PREFERRED EMBODIMENT(S)

[A] One Embodiment:

At propagation path estimation by an OFDM receiver in an OFDM communication system, a CIR (Channel Impulse Response) estimation unit estimates an impulse response group of a propagation path, and a valid impulse judging unit selects impulse responses (CIRs) equal to or greater than a specific threshold, out of the impulse response group, and a propagation path estimating unit obtains a propagation path response vector using (*i*) CIR estimation vectors including the selected CIRs as elements, (*ii*) a matrix S specified by the number *N* of points of IFFT used in OFDM modulation and by the number *Nc* of subcarriers used in actual transmission, (*iii*) a filter with a characteristic inverse of the column vector $\overline{S}_0$ of the matrix S.

FIG. 1 is a block diagram showing a configuration of an OFDM system including a channel estimating apparatus according to one preferred embodiment of the present invention. In the OFDM transmitter 10 of FIG. 1, the coding unit 11 encodes binary data by convolutional encoding or turbo encoding; the modulating unit 12 modulates the encoded data by, for example, QPSK, after interleaving is performed. Then, the serial/parallel converter (S/P converter) 13 converts modulation data symbols or pilot symbols into a parallel data sequence of Nc symbols, and generates Nc-number of subcarrier components.

The N-point inverse fast Fourier transform (IFFT) unit 14 performs inverse fast Fourier trans form processing (IFFT) on *Nc*-number of subcarrier components (modulation data), which enters from the S/P converter 13, substituting "0" for (*N-Nc*) -number of subcarrier components of N-number of subcarriers, and outputs *N* pieces of time-series data in parallel. The parallel/serial converter (P/S converter) 15 converts the *N* pieces of time-series data obtained by IFFT processing into serial data, and outputs the data as an OFDM symbol.

The guard interval inserting unit 16 inserts a guard interval GI into the OFDM symbol which is composed of N piecesof time-seriesdata;the digital/analogue converter (DAC) 17 converts the signal output from the guard interval inserting unit 16 into analogue signal; the lowpass filter (LPF) 18 selects and outputs a baseband signal component; the wireless unit (U/C) 19 upconverts the baseband signal into a radio frequency, and then sends the signal from antenna ATS after amplification. The signal, sent from the antenna ATS, propagates through a multipath propagation path (multipath fading channel) 20 and is received by the OFDM receiver 30. During the propagation, additive white Gaussian noise (AWGN) is impressed upon the transmission signal.

FIG. 2 is a view for describing data format and serial/parallel conversion performed by an S/P converter 13 according to the present embodiment. A single frame is composed of $32 \times Nc$ symbols, and a pilot P (known symbols) is time-multiplexed forward of the transmission data *DT.* A pilot P per frame includes, for example, $4 \times Nc$ symbols, and transmission data per frame includes $28 \times Nc$ symbols. The S/P converter 13 outputs Nc symbols of the pilot, as parallel data, over initial four times, and after that, the S/P converter 13 outputs Nc symbols of transmission data, as parallel data, over 28 times. As a result, during one frame interval, an OFDM symbol comprising four pilot symbols can be transmitted over four times, and on the receiver end, it is possible to estimate a propagation path (channel) using the pilot symbols, to perform channel compensation (fading compensation).

FIG. 3 is a view for describing insertion of a guard interval. Here, "guard interval insertion" means the following: when an IFFT output signal corresponding to N-number of subcarrier samples (=1 OFDM symbol) is regarded as a single unit, the end portion of the signal is copied to the front portion thereof. By this insertion of a guard interval *GI,* it becomes possible to eliminate the influence of ISI (Inter Symbol Interference) due to multipath.

Referring to FIG. 1 once again, in the OFDM receiver 30, the bandpass filter (BPF) 31 filters the signal received through the antenna ATR to remove unnecessary frequency components; the down converter (D/C) 32 converts the radio signal into a baseband frequency; an analogue/digital converter (not illustrated) performs analogue-to-digital conversion of the baseband signal; the guard interval removing unit 33 removes the guard interval. The S/P converter 34 converts the N pieces of time-series data, from which the guard interval has been removed, into parallel data, and inputs a receive-signal vector $(\overline{R}_t)$ into the propagation path estimating unit 35 and the propagation path compensating unit 36. Under a method which will be detailed later using pilot symbols, the propagation path estimating unit 35 calculates a propagation path response vector $(\overline{h}_t)$ formed by *N*-number of time-series elements; the propagation path compensating unit 36 multiplies Npieces of time-series data of a receive-signal vector *(Rt)* by each element of a propagation path response complex conjugate vector $(\overline{h}^{*}_t)$, to compensate for the propagation path (channel).

The N-point Fourier transformation unit 37 performs N-point FFT processing on the *N* pieces of time-series data, which has been subjected to propagation path compensation, to output *Nc*-number of subcarrier components; the P/S converter 38 outputs the Nc-number of subcarrier components in sequence as serial data; the demodulating unit 39 demodulates the input signal by, for example, QPSK; the decoding unit 40 decodes the input data after deinterleaving is performed and outputs the decoded signal.

(a) Construction of Propagation Estimating Unit:

FIG. 4 is a block diagram showing a construction of the propagation path estimating unit 35 of FIG. 1. As shown in FIG. 4, the propagationpath estimating unit 35 includes: a CIR estimating unit 51 which estimates an impulse response (Channel Impulse Response) CIR of a propagation path using a receive-signal vector $(\overline{R}_t)$ and a known pilot signal vector $(\overline{P}_t)$ and outputs a CIR estimation vector $(\overline{h}_{CIR})$; a valid impulse judging unit 52 which compares each CIR element of the CIR estimation vector $(\overline{h}_{CIR})$ with a threshold (first threshold) $TH_1$, and maintains CIR elements exceeding the

threshold TH$_1$ as valid CIR elements, and replaces CIR elements equal to or smaller than the threshold TH$_1$ by a specific value (for example, "0") (it is regarded that no propagation path response exists) ; an equalizing filter 53 which performs equalization processing on CIR elements other than "0", using a characteristic inverse of a characteristic of a band limiting filter used in system communication; an impulse re-judging unit (estimating unit) 54 which compares the CIR elements, which have been subjected to the equalization processing, with another threshold (second threshold) TH$_2$, and maintains CIR elements exceeding the threshold TH$_2$ as valid CIR elements, and replaces CIR elements equal to or smaller than the threshold TH$_2$ by "0".

Now, operations of the above-mentioned units 51, 52, 53, and 54 will be detailed using formulae.

(1) Calculation of CIR Estimation Vector:

In communications using an OFDM transmission scheme, pilot signals (pilot symbols) that usually have equal power are disposed in the frequency domain, and using such pilot signals, CIR estimation is performed. A signal vector $(P_f)$ in the frequency domain of the pilot signals and a signal vector $(P_t)$ in a time domain is expressed by

$$\vec{P}_f = \begin{bmatrix} P_f(0) & P_f(1) & \cdots & P_f(N-1) \end{bmatrix}^T \quad (1)$$

$$\vec{P}_t = \begin{bmatrix} P_t(0) & P_t(1) & \cdots & P_t(N-1) \end{bmatrix}^T \quad (2)$$

where T means a transpose, and the power of each element of $\bar{P}_f$ is "0" or "1". That is, N represents the IFFT size, and the electric power of Nc-number of subcarrier signals which transmit a pilot signal is "1", and the electric power of ($N-Nc$)-number of subcarrier signals which do not transmit a pilot signal is "0". The relationship between $\bar{P}_f$ and $\bar{P}_t$ is expressed by the following formula (3). Here, F$^{-1}$ indicates IFFT processing of the number N of samples.

$$P_t(k) = F^{-1}\left\{\bar{P}_f\right\} = \frac{1}{N}\sum_{n=0}^{N-1} P_f(n)e^{j2\pi kn/N} \quad (3)$$

The true propagation path response vector $(\bar{h}_t)$ in the time domain and additive noise $(\bar{w})$ are expressed by the following formulae (4) and (5), respectively.

$$\vec{h}_t = \begin{bmatrix} h_t(0) & h_t(1) & \cdots & h_t(N-1) \end{bmatrix}^T \quad (4)$$

$$\vec{w} = \begin{bmatrix} w(0) & w(1) & \cdots & w(N-1) \end{bmatrix}^T \quad (5)$$

As shown in FIG. 5(A), assuming that eight propagation paths PT$_1$ through PT$_7$ (multipath) are present between the transmitter 10 and the receiver 30, $(\bar{h}_t)$ is the propagation path response vector of each of the paths, and an example of this propagation path response vector is shown in FIG 5(B). For simplification, inter-symbol interference is not considered, and the following description will be made assuming that a guard interval (GI) of the pilot signal is equal to or larger than the data symbol length.

A receive-signal vector $(R_t)$ in the time domain is expressed by the following formulae (6) and (7).

$$\vec{R}_t = \begin{bmatrix} R_t(0) & R_t(1) & \cdots & R_t(N-1) \end{bmatrix}^T \quad (6)$$

$$R_t(k) = \sum_{n=0}^{N-1} h_t(n) P_t(k-n) + w(k) \qquad (7)$$

FIG. 6 shows an example where N=8. Note that additive noises are ignored here. The uppermost sequence in FIG. 6 column is a time-series signal that arrives at the receiver 30 through path $PT_0$; the second sequence is a time-series signal that arrives at the receiver 30 through path $PT_1$; the (i+1) th sequence is a time-series signal that arrives at the receiver 30 through path $PT_i$. Here, Pt (j) isapilot; Dt (j) is data. Reference character 1 denotes a signal in the time domain of the pilot signal; reference character 2 denotes the GI of the pilot signal; reference character 3 denotes a data signal that follows the pilot signal; reference character 4 denotes the GI of the data signal.

As described above, if the GI of a pilot signal is equal to or greater than the data symbol length, receive-signals within an FFT Window have guaranteed circular convolution. Hence, the receive-signal vector ($\bar{R}_t$) is expressed by the following matrix (8). This receive-signal vector is input to the CIR estimating unit 51 of FIG. 4.

$$\begin{bmatrix} R_t(0) \\ R_t(1) \\ \vdots \\ R_t(N-1) \end{bmatrix} = \begin{bmatrix} P_t(0) & P_t(N-1) & \cdots & P_t(1) \\ P_t(1) & P_t(0) & & P_t(2) \\ \vdots & & \ddots & \vdots \\ P_t(N-1) & P_t(N-2) & \cdots & P_t(0) \end{bmatrix} \cdot \begin{bmatrix} h_t(0) \\ h_t(1) \\ \vdots \\ h_t(N-1) \end{bmatrix} + \begin{bmatrix} w(0) \\ w(1) \\ \vdots \\ w(N-1) \end{bmatrix} \qquad (8)$$

From the formula (8), using the receive-signal vector ($\bar{R}_t$) and the known pilot signal vector ($\bar{P}_t$), the channel impulse response CIR is estimated as follows based on a sliding correlation. That is, the CIR estimation vector is

$$\vec{\hat{h}}_{CIR} = \begin{bmatrix} \hat{h}_{CIR}(0) & \hat{h}_{CIR}(1) & \cdots & \hat{h}_{CIR}(N-1) \end{bmatrix}^T \qquad (9)$$

$$\hat{h}_{CIR}(k) = \frac{1}{N} \sum_{n=0}^{N-1} R_t(n) P_t^*(k-n) \qquad (10)$$

The above formula can be expressed by the following matrix (11) :

$$\begin{bmatrix} \hat{h}_{CIR}(0) \\ \hat{h}_{CIR}(1) \\ \vdots \\ \hat{h}_{CIR}(N-1) \end{bmatrix} = \frac{1}{N} \begin{bmatrix} P_t^*(0) & P_t^*(1) & \cdots & P_t^*(N-1) \\ P_t^*(N-1) & P_t^*(0) & & P_t^*(N-2) \\ \vdots & & \ddots & \vdots \\ P_t^*(1) & P_t^*(2) & \cdots & P_t^*(0) \end{bmatrix} \cdot \begin{bmatrix} R_t(0) \\ R_t(1) \\ \vdots \\ R_t(N-1) \end{bmatrix} \qquad (11)$$

and can be transformed into

$$\vec{\hat{h}}_{CIR} = \frac{1}{N} \mathbf{P}_t^H \cdot \vec{R}_t = \frac{1}{N} \mathbf{P}_t^H \cdot \left( \mathbf{P}_t \cdot \vec{h}_t + \vec{w} \right) = \frac{1}{N} \mathbf{P}_t^H \cdot \mathbf{P}_t \cdot \vec{h}_t + \frac{1}{N} \mathbf{P}_t^H \cdot \vec{w} \qquad (12)$$

$$\text{where } \mathbf{P_t} = \begin{bmatrix} P_t(0) & P_t(N-1) & \cdots & P_t(1) \\ P_t(1) & P_t(0) & & P_t(2) \\ \vdots & & \ddots & \vdots \\ P_t(N-1) & P_t(N-2) & \cdots & P_t(0) \end{bmatrix} \qquad (13)$$

The impulse response estimating unit 51 estimates the CIR estimation vector $(\hat{h}_{CIR})$ from the above formulae (11) through (13), and inputs it to the valid impulse judging unit 52.

Although a CIR estimation method in a time domain was explained in the above description, similar processing is available in a frequency domain. That is, in a frequency domain, instead of the time domain formula (10), using

$$\hat{h}_{CIR}(k) = F^{-1}\left\{ \frac{R_f(k)}{P_f(k)} \right\} = F^{-1}\left\{ \frac{R_f(k)P_f^*(k)}{\left|P_f^*(k)\right|^2} \right\}$$

frequency domain signal processing is performed. $0 \le k \le N$-1 is the same as in the case of the time domain, but k is a subcarrier number (k is a sample number in the time domain). In the above frequency domain signal processing, for the purpose of ultimately performing IFFT, the frequency signal enclosed by { } is converted into the time domain signal of the formula (10) . Here, signal processing performed in a frequency domain is advantaged in that it needs a smaller-sized circuit than a direct calculation in the time domain.

(2) Valid Impulse Judgement:

Each element $S_{ij}$ of $\mathbf{P_t^H} \cdot \mathbf{P_t}$ in the CIR estimation vector $(\hat{h}_{CIR})$ estimated by the formula (12) can be expresses as follows:

$$S_{ij} = \sum_{n=0}^{N-1} P_t^*(n-i) \cdot P_t(n-j) \qquad (14)$$

Further, by expressing the column as a vector (for example, j=0), the formula can be transformed into the following circular convolution operation formula:

$$\vec{S}_0 = \sum_{n=0}^{N-1} P_t^*(n-i) \cdot P_t(n) \qquad (15)$$

Since the circular convolution operation is equivalent to what is obtained by applying an IFFT to a product in a frequency domain, the formula can be transformed into

$$\vec{S}_0 = F^{-1}\left\{ F\{\vec{P}_t^*\} \cdot F\{\vec{P}_t^T\} \right\} = F^{-1}\left\{ \vec{P}_f^* \cdot \vec{P}_f^T \right\} \qquad (16)$$

where, F indicates FFT processing; F$^{-1}$ indicates IFFT processing. Since $\vec{P}_f^* \cdot \vec{P}_f^T$ is the electric power of the pilot signal, the above formula compensates for information of each element of $\overline{P}_f$, and non-transmission subcarrier is "0", and a subcarrier used in transmission is "1". The formula (16) indicates that $\overline{S}_0$ is IFFT processing of the pilot frequency characteristic, that is, the time response, and it is the time response of the band limiting filter in a case of a single carrier-base transmission method, in which band limitation is performed.

In this manner, since information of each element of $P_f$ is compensated for, when non-transmission subcarrier is not present (all the elements of $\vec{P}_f^* \cdot \vec{P}_f^T$ are "1"), $\overline{S}_0$ is an impulse. On the other hand, when non-transmission subcarrier is present ("0" is included in the elements of $\vec{P}_f^* \cdot \vec{P}_f^T$) , $\overline{S}_0$ is a time response function specified by $N$ and $Nc$. In the second conventional art, this is limited to a sinc function. Since transmission subcarrier placement becomes such that, as shown in FIG. 16(B), that is, subcarriers at both ends are non-transmission subcarriers (not used in data transmission), the time response function becomes a rectangular function on the frequency axis, and if this is subjected to IFFT processing, it becomes a sinc function on the time axis. This invention does not depend on the subcarrier placement (known information), and is featured in that processing is performed based on the corresponding time response function (known information) (in this example, a description will be made of a subcarrier placement of FIG. 16(B)). From this, since $\overline{S}_0$ is an even function, the following definition can be established:

$$\vec{S}_0 = \begin{bmatrix} s(0) & s(1) & \cdots & s((N/2)-1) & s(-N/2) & \cdots & s(-1) \end{bmatrix}^T \quad (17)$$

FIG.7 is a view for describing a waveform of a sinc function. The peak value of a main lobe A is $Nc/N$, and the smaller the $Nc$, the wider the width W. In FIG. 7, each piece of time-series data S(0), S(1) ..., S(1) when the left half of the sinc function is folded as shown by the broken line, becomes each element of the column vector $\overline{S}_0$ of the formula (17) . The vector of the k-th column is a vector which is obtained by shifting $\overline{S}_0$ by k. Consequently,

$$S = P_t^H \cdot P_t$$

can be expressed by the following matrix:

$$S = \begin{bmatrix} s(0) & s(-1) & & & \vdots & s(1) \\ s(1) & s(0) & \ddots & s((N/2)-1) & \vdots \\ \vdots & s(1) & \ddots & \ddots & s(-N/2) & s((N/2)-1) \\ s((N/2)-1) & \vdots & \ddots & \ddots & \ddots & \vdots & s(-N/2) \\ s(-N/2) & s((N/2)-1) & \ddots & \ddots & s(-1) & \vdots \\ \vdots & s(-N/2) & \ddots & s(0) & s(-1) \\ s(-1) & \vdots & & s(1) & s(0) \end{bmatrix} \quad (18)$$

That is, each column vector $\overline{S}_0, \overline{S}_1, \overline{S}_2, \cdots$ of the formula (18), as shown in FIG. 8, is the sinc function of FIG. 7 sequentially shifted by a time difference $\Delta t$ of each element of the propagation path response vector ($\overline{h}_t$).

From the above description, the CIR estimation vector ( $\vec{h}_{CIR}$ ) is expressed as follows:

$$\vec{\hat{h}}_{CIR} = \mathbf{P_t^H} \cdot \left(\mathbf{P_t} \cdot \vec{h}_t + \vec{w}\right) = \mathbf{P_t^H} \cdot \mathbf{P_t} \cdot \vec{h}_t + \mathbf{P_t^H} \cdot \vec{w} = \mathbf{S} \cdot \vec{h}_t + \mathbf{P_t^H} \cdot \vec{w} \quad (19)$$

That is, $\vec{\hat{h}}_{CIR}$ can be considered to be the result of adding additive noise $\mathbf{P_t}^{H} \cdot \vec{w}$ to the product obtained by multiplying S by the propagation path response vector $\overline{h}_t$. From this, $\overline{h}_{CIR}$ is observed as both of the time response vector due to band limitation and the propagation path response vector $\overline{h}_t$ convoluted. Here, since S is formed by a vector having the shape of a sing function, its value becomes abruptly smaller as it comes apart from the main lobe peak value s(0). FIG. 9 is a view for describing the CIR estimation vector where

$$\vec{\hat{h}}_{CIR} = \mathbf{S} \cdot \vec{h}_t$$

It shows that the CIR estimation vector abruptly smaller as it comes part from the main lobe peak value s (0) . This indicates that information (energy) of the propagation path response vector $\overline{h}_t$ is dispersed from the main lobe to a certain specific interval.

In light of the above, the CIR estimation vector ( $\vec{\hat{h}}_{CIR}$ ) calculated by the formula (11) has a shape shown in FIG. 9. Hence, the valid impulse judging unit 52 of FIG. 4 compares each CIR element (impulse) of the CIR estimation vector with a threshold $TH_1$ to select impulses exceeding the threshold $TH_1$, thereby making impulses equal to or smaller than the threshold $TH_1$ non-existent (making such impulses "0"). For example, in FIG. 9, CIR element $h_{CIR}(3)=0$, and there is no propagation path response. In addition, "0" is substituted for samples other than a specific number m ($1 \leq m \leq N$) of samples bracketing the maximal peak value s(0) of the selected impulse. The threshold value $TH_1$ is electric power lower than the CIR maximal peak value by a value obtained based on the number N of points of IFFT used in OFDM modulation and on the number $Nc$ of subcarriers used in transmission.
Alternatively, the threshold value $TH_1$ is electric power exceeding background noise power, estimated somehow, by a specific value.

(3) Derivation of Propagation Path Response Vector with Equalizing Filter:

In the present invention, in a single carrier base transmission method in which the time response of the frequency characteristic of the pilot, that is, band limitation, is performed, influence of $\overline{S}_0$ is removed by means of a filter (inverse filter) having a characteristic inverse of $\overline{S}_0$ which represents time response of the band limiting filter, to estimate a true propagation path response vector $\overline{h}_t$. As described above, the estimated $\hat{h}_{CIR}$ is convolution of the time response vector due to band limitation and true propagation path response vector $\overline{h}_t$ added with additive noises. Thus, by equalizing $\vec{\hat{h}}_{CIR}$ with a filter having a characteristic inverse of the time response vector due to band limitation, that is, $\overline{S}_0$, it is possible to obtain a true propagation response vector $\overline{h}_t$. Here, since the estimated $h_{eIR}$ is added with additive noise, it is necessary to remove influence of the noise by replacing elements smaller than a predetermined threshold with "0", regarding such elements as noise. Therefore, in the present embodiment, as already described, the valid impulse judging unit 52 compares each CIR element (impulse) of the CIR estimation vector with the threshold $TH_1$, to select impulses exceeding the threshold $TH_1$, thereby eliminating impulses equal to or smaller than the threshold $TH_1$ (making such impulses "0").
Further, since a characteristic inverse of an ideal filter, such as OFDM non-transmission subcarrier, diverges, it is necessary to obtain filter coefficients (tap coefficients) of the inverse filter using the time response (vector). Furthermore, in order to eliminate the influence of equalization error using a part of the time response, it is necessary to replace elements, out of the elements which have been subjected to equalization, equal to or smaller than the threshold value $TH_2$ with "0", regarding the such elements as equalization errors. This processing is performed by the impulse re-judging unit 54 (will be described later).

(4) Derivation of Tap Coefficients of Equalizing Filter:

Next, a description will be made hereinbelow of a derivation method of tap coefficients in cases where a FIR (Finite Impulse Response)-type filter is used as an equalizing filter 53.

The tap coefficients of an inverse filter which has a characteristic inverse of $\overline{S}_0$ are obtained by obtaining the inverse matrix of $S$ and taking out a specific row (for example, N/2th row). However, since an inverse characteristic of an ideal filter is dispersed, it is impossible to obtain usable tap coefficients by obtaining the inverse matrix of S. Thus, utilizing the feature that the electric power concentrates on elements in the principal diagonal of the formula (18) in the time response vector of a band limiting filter, in particular, a lowpass filter, it is assumed elements other than the elements in the vicinity of the elements in the principal diagonal will not influence other elements. Then (2K+1) $\times$ (2K+1) matrix Q is generated by the following formula (19):

$$\mathbf{Q} = \begin{bmatrix} s(0) & s(-1) & & & \vdots & s(1) \\ s(1) & s(0) & \ddots & & s(K) & \vdots \\ \vdots & s(1) & \ddots & \ddots & s(-K) & s(K) \\ s(K) & \vdots & \ddots & \ddots & \ddots & \vdots & s(-K) \\ s(-K) & s(K) & & \ddots & \ddots & s(-1) & \vdots \\ \vdots & s(-K) & & & \ddots & s(0) & s(-1) \\ s(-1) & \vdots & & & & s(1) & s(0) \end{bmatrix} \quad (19)$$

This corresponds to degenerating a matrix in view of circulation, using elements in the vicinity of the elements in the principal diagonal of **S**. With this operation, the inverse matrix $\mathbf{R}(=\mathbf{Q}^{-1})$ of matrix $\mathbf{Q}$ becomes stable, and it becomes possible to use the $K$-th row (that is, the center row) as a tap coefficient $\overline{r}$. FIG. 10 is a block diagram showing a configuration of a propagation path estimation unit 35 in which a construction of an equalizing filter 53 is illustrated. FIG. 10 illustrates a 5-tap equalizing filter 53 with tap coefficients r(0), r(1), r(2), r(3), and r(4). The equalizing filter 53 includes:

four delay circuits (D) 531 which sequentially delay an input signal $\vec{h}_{CIR}$, input from the valid impulse judging unit 52, by a specific time; five tap multipliers 532 which multiply the input and output of each of the delay circuit 531 by the above tap coefficients r (0), r (1), r (2), r(3), and r (4) ; an adder 533 which adds (sums) the multiplication results of the tap multipliers 532. This arrangement makes it possible to obtain the propagation path response vector $\overline{h}_t$ as an output of the adder 533.

Although the above description of a derivationmethod of tap coefficients was made on the inverse matrix R (=$\mathbf{Q}^{-1}$) of the matrix **Q**, the following formula (20) can be also used based on MMSE (Minimum Mean Squared Error) criteria:

$$\mathbf{R} = \frac{\mathbf{Q}^{\mathrm{H}}}{\mathbf{Q}^{\mathrm{H}}\mathbf{Q} + \sigma^2} \quad (20)$$

Here, $\sigma^2$ is noise power added over the propagation path and a value of an environment in which a system operates is used. Note that a construction of the propagation path estimating unit 35 in this case is the same as that of FIG. 10.

Further, the inverse matrix $\mathbf{R}(=\mathbf{Q}^{-1})$ of $\mathbf{Q}$ can be obtained by repeat operation of LMS (Least-Mean-Square), NLMS (Normalized LMS), and RLS (Recursive Least Square) . For example, in a case of NLMS, where an impulse response $\overline{S}_0$ of the band limiting filter is an input, and a known signal is a unit impulse response, the inverse matrix can be obtained by repeat operation shown by the following formula (21):

$$\vec{r} = \vec{r} + \frac{\alpha}{\left\| \vec{S}_0 \right\|^2} \vec{S}_0 e^*(t) \quad (21)$$

Here, in the formula (21), e*(t) is an error signal after equalization, and $\alpha$ is a step coefficient. An example construction of the propagation path estimating unit 35 for this case is shown in FIG. 11. In FIG. 11, the propagation path estimating unit 35 includes: a filter unit 55 having the same construction as that of the 5-tap equalizing filter 53 with the tap coefficients r (0), r (1), r (2), r (3), and r (4), which filter unit 55 receives impulse response $\overline{S}_0$ of the band limiting filter as an input and obtains an error signal e*(t); a weight generating unit 56 which multiplies the filter unit 55 by a weight, to obtain the tap coefficient r expressed by the above formula (21); four delay circuits (D) 551, as the filter unit 55, which sequentially delays the input signal $\overline{S}_0$ by a specific time; five tap multipliers 552 which multiplies the input and output of each of the delay circuits 551 by the above tap coefficients r (0), r (1), r (2), r (3), and r(4); an adder 553 which adds (sums) the multiplication results of the tapmultipliers 552. This arrangement makes it possible to obtain an error signal e*(t) as an output of the adder 553. Further, by means of multiplication of the weight by the weight generating unit 56, r(0), r(1), r (2), r (3), and r (4) are set (updated).

Here, it is enough to perform the processing of obtaining the tap coefficient $\overline{r}$ at least once at initiation of operation, the equalizing filter 53 is capable of functioning (doubling) as the above filter unit 55 at initiation of operation. Although an FIR-type filter is provided as the filter unit 55 (equalizing filter 53) in FIG. 11, an IIR (Infinite Impulse Response) -type filter or a combination of FIR-type and IIR-type filters is also applicable.

After that, the impulse re-judging unit 57 performs threshold judgment once again of the propagation path response vector $\overline{h}_t$, obtained by the equalizing filter 53, using a threshold $TH_2$, and replaces elements equal to or smaller than the threshold $TH_2$ with "0", and outputs the result. This is because of the following reasons. $\vec{\hat{h}}'_{CIR}$ selected by the valid impulse judging unit 52 at threshold judgment can sometimes include impulses exceeding the threshold $TH_1$ due to influence between side lobes of the sinc function as shown by broken line arrow in FIG. 12 (A), and such impulses can be output as valid impulses by the valid impulse judging unit 52 as shown in FIG. 12(B). Further, since the equalizing filter 53 obtains the tap coefficient $\overline{r}$ using only a part of the time responses, not all of the time responses, influence of equalization error is caused.

Hence, the impulse re-judging unit 57 performs threshold judgment of the propagation path response vector $\overline{h}_t$, from which influence of the side lobes has been removed as shown in FIG. 12(C), once again using the threshold $TH_2$, and replaces impulses equal to or smaller than the threshold $TH_2$ by "0" as shown in FIG. 12(D). This makes it possible to remove the influence of equalization error so that background noise is effectively suppressed.

FIG. 13 is a flowchart for describing an operation (channel estimation processing) of the propagation path estimating unit 35. As shown in FIG. 13, the CIR estimating unit 51 uses the receive-signal vector ($\overline{R}_t$) and the pilot signal vector ($\overline{P}_t$) to estimate channel impulse responses (CIRs) and outputs a CIR estimation vector ($\vec{\hat{h}}_{CIR}$) (step 101) .

The valid impulse judging unit 52 compares each CIR element of the ICR estimation vector ($\vec{\hat{h}}_{CIR}$) with a threshold $TH_1$, and maintains CIR elements of the CIR estimation vector equal to or larger than the threshold $TH_1$, and replaces CIR elements equal to or smaller than the threshold $TH_1$ with "0" (step 102). Using a filter (inverse filter) having a characteristic inverse of $\overline{S}_0$, which is the time response of the band limiting filter, the equalizing filter 53 performs equalization processing on an output of the valid impulse judging unit 52, thereby estimating a propagation response vector $\overline{h}_t$ (step 103). The impulse re-judging unit 57 performs threshold judgement of the propagation response vector $\overline{h}_t$ once again with the threshold $TH_2$, and replaces elements of the propagation path vector $\overline{h}_t$ equal to or smaller than the threshold $TH_2$ by "0" and outputs the result (step 104).

In this manner, according to the propagation path estimating unit 35, each CIR element of the CIR estimation vector (impulse response group) is independently estimated for each path. Thus, if paths are so close to each other that side lobes of the channel impulse response (CIR) of each path overlap, it is still possible to correctly judge that CIRs equal to or smaller than the threshold $TH_1$ do not exist, and this makes it possible to obtain a propagation path estimation value in which background noise is suppressed.

In addition, since a specific number of samples, out of the samples composing CIRs larger than the threshold value $TH_1$, are used for CIR estimation, it is possible to reduce the CIR estimation error, which is an issue in the second conventional art. What is more, unnecessary side lobes are made into "0", whereby propagation path estimation in which background noises are suppressed is available.

In particular, in the present embodiment, the CIR estimation vector estimated by the CIR estimating unit 51 is made to pass through the equalizing filter 53 having a characteristic inverse of that of the band limiting filter, to equalize the CIR estimation vector, so that the propagation path response vector is obtained. Thus, a full-size matrix operation in $S$ is not necessary, and the present embodiment can be realized by hardware, not by software (see FIG. 10 and FIG. 11) . This makes it possible to reduce the circuit size and to realize high-speed processing.

Effects of the present invention will now be confirmed by simulation. The simulation parameters are shown in the following table 1, and real number components of frequency characteristics of propagation path estimation values are shown in FIG. 14. In FIG. 14, a plot by $\Delta$ mark indicates a frequency response before removal of background noises; a plot by+ mark indicates a frequency response after removal of background noises by application of the present invention; a plot by $\times$ mark indicates a frequency response of a true propagation path. Here, the tap length of the equalizing filter 53 is "11", and the threshold $TH_1$ of the valid impulse judging unit 52 is "0" (that is, the valid impulse judging unit 52 can be omitted in this example), and the threshold value $TH_2$ used in the impulse re-judging unit 54 is -20 dB from the peak power in CIR. This result shows that application of the present invention makes it possible to remove noise and to estimate a value close to the true propagation path characteristic.

Table 1: Simulation Parameters

| Transmission method | OFDM |
| --- | --- |
| Number of subcarriers | 896 |
| Number of IFFT/FFT points | 1024 |
| GI length | 200 |
| Propagation path model | 2-path equal-level and static model<br>One sample delay interval SNR=20 dB |

As confirmed in the above simulation, in OFDM communications in which subcarriers that are not used in transmission are present, an estimated impulse response is input to the equalizing filter 53 having known tap coefficients, so that influence of band limitation can be removed and a propagation path estimation value from which background noise has been removed is obtained.

The present invention should by no means be limited to the above-illustrated embodiment, but various changes or modifications may be suggested without departing from the gist of the invention.

For example, the present invention is applicable not only to OFDMbut also to a single carrier base communication method in which a band limiting filter is used.

Further, the present invention is also applicable to path search performed on a RAKE receiver in a Code Division Multiple Access (CDMA) system. That is, by means of providing the similar construction to that of the propagation path estimating unit 35, which was described above referring to FIG. 4, FIG. 10, and FIG. 11, as a path searcher which searches receive-signals for paths comprising multipath, it is possible to calculate a propagation path response vector in the similar method to the above-described method, and to search for the paths.

Further, in all of the above examples, among the impulse response group of the estimated propagation paths, impulse responses equal to or smaller than a specific threshold $TH_1$ (or $TH_2$) are regarded as being non-existent, and are replaced by "0". However, other specific values which can substantially be treated as "0" can be also used. For example, in floating-point arithmetic or fixed-point arithmetic, LSB takes "1" and the remaining takes "0" or the state of being null.

**Claims**

1.  A propagation path estimation method for a receiver (30) of a radio communication system in which band limiting of a signal is performed in signal transmission and reception, said method comprising:

    estimating an impulse response group of a propagation path of the signal (101);
    having the impulse response group pass through a filter (53) with a filter characteristic inverse of a band limiting filter characteristic (103) for said band limiting;
    removing impulse responses corresponding to noise components from an output of the filter (53) by threshold judgement (104); and
    estimating the propagation path using impulse responses which are not removed.

2.  Apropagation path estimation method as set forth in claim 1, wherein impulse responses equal to or smaller than a first threshold ($TH_1$), among the impulse response group, is replaced by a specific value before the impulse response group is made to pass through the filter (53).

3.  Apropagation path estimation method as set forth in claim 1 or claim 2, wherein impulse responses equal to or smaller than a second threshold ($TH_2$), among an output of the filter (53), is replaced by a specific value.

4.  Apropagation path estimation method as set forth in any one of claim 1 through claim 3, wherein the filter (53) is a FIR-type filter whose filter coefficients (r (0), r(1), ...) are obtained by an inverse matrix operation which uses a part of time response of the band limiting filter characteristic.

5. Apropagation path estimation method as set forth in claim 4,
wherein using elements in the vicinity of elements in the principal diagonal of a time response functionmatrix (S matrix) with respect to the signal, as a part of the time response, a degenerate matrix (**Q**) of the S matrix is obtained, wherein an inverse matrix (**R**=**Q**$^{-1}$) of the degenerate matrix is obtained, and
wherein elements of the center row of the inverse matrix (**R**=**Q**$^{-1}$) are used as the filter coefficients (r(0), 4(1), ...).

6. Apropagationpath estimation method as set forth in any one of claim 1 through claim 3, wherein the filter coefficients (r(0), 4(1), ...) of the filter (53) is obtained by repeat operation.

7. Apropagationpath estimationmethod as set forth in claim 6, wherein the repeat operation of the filter coefficients (r (0), 4(1), ...) is executed using the filter (53) when the receiver (30) is activated.

8. Apropagationpath estimation apparatus (35) for use in a receiver (30) of a radio communication system in which band limiting of a signal is performed in signal transmission and reception, said apparatus (35) comprising:

an impulse response estimating unit (51) which estimates an impulse response group of a propagation path of the signal,
a filter (53) with a filter characteristic inverse of a band limiting filter characteristic for said band limiting, into which filter the impulse response group estimated by the impulse response estimating unit (51) is input,
an estimating unit which estimates the propagation path by selecting, by means of threshold judgement, impulse responses from an output of the filter (53), said selected impulse responses not including impulse responses corresponding to noise components.

9. A propagation path estimation apparatus (35) as set forth in claim 8, further comprising an impulse response replacing unit (52) which replaces impulse responses equal to or smaller than a first threshold (TH$_1$), among the impulse response group estimated by said impulse response estimating unit (51), by a specific value and outputs the replaced value to said filter (53).

10. A propagation path estimation apparatus (35) as set forth in claim 8 or claim 9, wherein said estimating unit replaces impulse responses equal to or smaller than a second threshold (TH$_2$), among an output of the filter (53), by a specific value.

11. A propagation path estimation apparatus (35) as set forth in any one of claim 8 through claim 10,
wherein the filter (53) is a FIR-type filter, and
wherein said apparatus (35) further comprises an inverse matrix operation unit which obtains filter coefficients (r (0), r(1), ...) of the filter (53) by an inverse matrix operation which uses a part of time response of the band limiting filter characteristic.

12. A propagation path estimation apparatus (35) as set forth in claim 11, wherein said inverse matrix operation unit obtains, using elements in the vicinity of elements in the principal diagonal of a time response function matrix (S matrix) with respect to the signal, as a part of the time response, a degenerate matrix (Q) of the S matrix, and obtains an inverse matrix (R=Q$^{-1}$) of the degenerate matrix, and uses elements of the center row of the inverse matrix (**R**=**Q**$^{-1}$) as the filter coefficients (r (0), 4 (1), ... ) .

13. A propagation path estimation apparatus (35) as set forth in any one of claim 8 through claim 10, further comprising a repeat operation unit which obtains the filter coefficients (r (0), 4 (1), ...) of the filter (53) by repeat operation.

14. A propagation path estimation apparatus (35) as set forth in claim 13, wherein said repeat operation unit executes the repeat operation of the filter coefficients (r (0), 4 (1), ...) using the filter (53) when the receiver (30) is activated.

# FIG. 1

OFDM TRANSMITTER

ATS

DATA → CODING UNIT (11) → MODULATING UNIT (12) → S/P (13) $N_c$ → IFFT (14) N → P/S (15) → GI (16) → DAC (17) → LPF (18) → U/C (19) → ATS

PILOT SYMBOL →

AWGN

MULTIPATH FADING CHANNEL (20)

OFDM RECEIVER (30)

ATR → BPF (31) → D/C (32) → -GI (33) → S/P (34) N → $R_{t(0)}$ ... $R_{t(N-1)}$ → ⊗ (36) N → FFT (37) N → P/S (38) → DEMODULATING UNIT (39) → DECODING UNIT (40) →

PROPAGATION PATH ESTIMATING UNIT (35) → ht

EP 1 703 685 A2

## FIG. 2

1 FRAME
(=32 × Nc SYMBOLS)

DATA DT          PILOT P

28 27          3 2 1    4 3 2 1

28 × Nc
SYMBOLS          4 × Nc
SYMBOLS

28 --------- 2 1   4  4  3  2  1

1
2
3

(Nc SYMBOLS)

Nc

## FIG. 3

←1 OFDM SYMBOL→

| GI |
COPY

| GI |
COPY

# FIG. 4

35:PROPAGATION PATH
ESTIMATING UNIT

$\vec{R_t}$ → | 51 $\vec{P_t}$ CIR ESTIMATING UNIT | $\hat{\vec{h}}_{CIR}$ → | 52 $TH_1$ VALID IMPULSE JUDGING UNIT | $\hat{\vec{h}}'_{CIR}$ → | 53 $\vec{r}$ EQUALIZING FILTER | $\hat{\vec{h}}'_t$ → | 54 $TH_2$ IMPULSE RE-JUDGING UNIT | $\hat{\vec{h}}_t$ →

## FIG. 5(A)

MULTIPATH $PT_0$ THROUGH $PT_7$

## FIG. 5(B)

# FIG. 6

FFT Window

| ht(0) | Pt(5) | Pt(6) | Pt(7) | Pt(0) | Pt(1) | Pt(2) | Pt(3) | Pt(4) | Pt(5) | Pt(6) | Pt(7) | Dt(6) | Dt(7) | Dt(0) | Dt(1) | Dt(2) | Dt(3) | Dt(4) | Dt(5) | Dt(6) | Dt(7) |
|---|---|---|---|---|---|---|---|---|---|---|---|---|---|---|---|---|---|---|---|---|---|
| ht(1) | Pt(4) | Pt(5) | Pt(6) | Pt(7) | Pt(0) | Pt(1) | Pt(2) | Pt(3) | Pt(4) | Pt(5) | Pt(6) | Pt(7) | Dt(6) | Dt(7) | Dt(0) | Dt(1) | Dt(2) | Dt(3) | Dt(4) | Dt(5) | Dt(6) |
| ht(2) | Pt(3) | Pt(4) | Pt(5) | Pt(6) | Pt(7) | Pt(0) | Pt(1) | Pt(2) | Pt(3) | Pt(4) | Pt(5) | Pt(6) | Pt(7) | Dt(6) | Dt(7) | Dt(0) | Dt(1) | Dt(2) | Dt(3) | Dt(4) | Dt(5) |
| ht(3) | Pt(2) | Pt(3) | Pt(4) | Pt(5) | Pt(6) | Pt(7) | Pt(0) | Pt(1) | Pt(2) | Pt(3) | Pt(4) | Pt(5) | Pt(6) | Pt(7) | Dt(6) | Dt(7) | Dt(0) | Dt(1) | Dt(2) | Dt(3) | Dt(4) |
| ht(4) | Pt(1) | Pt(2) | Pt(3) | Pt(4) | Pt(5) | Pt(6) | Pt(7) | Pt(0) | Pt(1) | Pt(2) | Pt(3) | Pt(4) | Pt(5) | Pt(6) | Pt(7) | Dt(6) | Dt(7) | Dt(0) | Dt(1) | Dt(2) | Dt(3) |
| ht(5) | Pt(0) | Pt(1) | Pt(2) | Pt(3) | Pt(4) | Pt(5) | Pt(6) | Pt(7) | Pt(0) | Pt(1) | Pt(2) | Pt(3) | Pt(4) | Pt(5) | Pt(6) | Pt(7) | Dt(6) | Dt(7) | Dt(0) | Dt(1) | Dt(2) |
| ht(6) | Pt(7) | Pt(0) | Pt(1) | Pt(2) | Pt(3) | Pt(4) | Pt(5) | Pt(6) | Pt(7) | Pt(0) | Pt(1) | Pt(2) | Pt(3) | Pt(4) | Pt(5) | Pt(6) | Pt(7) | Dt(6) | Dt(7) | Dt(0) | Dt(1) |
| ht(7) | Pt(6) | Pt(7) | Pt(0) | Pt(1) | Pt(2) | Pt(3) | Pt(4) | Pt(5) | Pt(6) | Pt(7) | Pt(0) | Pt(1) | Pt(2) | Pt(3) | Pt(4) | Pt(5) | Pt(6) | Pt(7) | Dt(6) | Dt(7) | Dt(0) |

Rt(0)  Rt(1)  Rt(2)  Rt(3)  Rt(4)  Rt(5)  Rt(6)  Rt(7)

EP 1 703 685 A2

# FIG. 7

# FIG. 8

# FIG. 9

FIG. 10

EP 1 703 685 A2

# FIG. 11

FIG. 12(A)

TH1

$\vec{h}_{CIR}$

FIG. 12(B)

$\vec{h}_{CIR}$

"0"　　"0"　　"0"

$\times S^{-1}$

FIG. 12(C)

ht

TH2

FIG. 12(D)

TRUE ht

# FIG. 13

START

$\vec{h}_{CIR}$ ESTIMATION — 101

VALID IMPULSE JUDGEMENT — 102

INVERSE FILTER PROCESSING — 103

VALID IMPULSE RE-JUDGEMENT/OUTPUT — 104

END

# FIG. 14

# FIG. 15

| | |
|---|---|
| 1 | h1 |
| 2 | h2 |
| 3 | h3 |
| 4 | h4 |
| 5 | h5 |
| 6 | h6 |
| 7 | h7 |
| 8 | h8 |
| 9 | h9 |
| m | m |
| 511 | h512 |
| 512 | h512 |

SUB-CARRIER NO.

# FIG. 16(A)

N SUBCARRIERS

$f_1$ $f_2$ ------- $f_N$

# FIG. 16(B)

N SUBCARRIERS

$f_1 \cdots f_i$     $f_m \cdots f_N$

Nc

# FIG. 17

# FIG. 18(A)

# FIG. 18(B)

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2005076318 A

- JP 2000341242 A

**Non-patent literature cited in the description**

- **ATARASHI ; ABETA ; SAWAHASHI.** Performance of Forward Link Broadband Packet TD-OFCDM with Iterative Channel Estimation. *Technical Report of IEICE,* January 2001, vol. RCS2000-, 85-91